# EUROPÄISCHE PATENTANMELDUNG

(11) **EP 2 492 292 A1**
(43) Veröffentlichungstag der Anmeldung: **29.08.2012**
(21) Anmeldenummer: 12169794.0
(22) Anmeldetag: 29.05.2012
(51) Int. Cl.: C08F 6/00, C08F 36/06, C08F 36/08

(54) **Polymerisation von Dien**

(71) Anmelder: Evonik Industries AG, 45128 Essen (DE)
(72) Erfinder: Beierlein, Christine, Dr., 44795 Bochum (DE); Haberkorn, Niko, Dr., 45657 Recklinghausen (DE); Korell, Michael, Dr., 44805 Bochum (DE); Grünfelder, Thomas, Dr., 45657 Recklinghausen (DE); Richter, Norbert, Dr., 45772 Marl (DE)

(57) **Zusammenfassung**

Die Erfindung betrifft ein Verfahren zur Polymerisation eines Diens, umfassend die Schritte Umsetzung des Diens mit Wasserstoffperoxid in einem hydrophilen organischen Lösungsmittel in Anwesenheit von Wasser unter Bildung eines Reaktionsgemisches bei Temperaturen von 50 bis 150 °C und Druckwerten von 0 - 50 bar, Kontaktieren des Reaktionsgemisches mit Wasser, wobei die Temperatur des Wassers 20 bis 80 °C, bevorzugt 50 bis 65 °C beträgt, Abtrennen von nicht abreagiertem gasförmigen Dien von dem mit Wasser kontaktierten Reaktionsgemisch aus Schritt b), gefolgt von Kondensation, Destillation und Wiederverwendung des nicht abreagierten gasförmigen Diens, Abtrennung der wässrigen Phase umfassend das hydrophile Lösungsmittel vom Reaktionsgemisch, gefolgt von und Wiederverwendung des hydrophilen Lösungsmittels in Schritt a), und destillatives Reinigen des Polymerisationsproduktes sowie eine dazu eingerichtete Anlage sowie die Verwendung dieser Anlage Polymerisation eines Diens, bevorzugt 1,3-Butadien oder Isopren.

## Beschreibung

Die Erfindung betrifft ein Verfahren zur Polymerisation eines Diens, umfassend die Schritte Umsetzung des Diens mit Wasserstoffperoxid in einem hydrophilen organischen Lösungsmittel in Anwesenheit von Wasser unter Bildung eines Reaktionsgemisches bei Temperaturen von 50 bis 150 °C und Druckwerten von 0-50 bar, Kontaktieren des Reaktionsgemisches mit Wasser, wobei die Temperatur des Wassers 20 bis 80 °C, bevorzugt 50 bis 65 °C beträgt, Abtrennen von nicht abreagiertem gasförmigen Dien von dem mit Wasser kontaktierten Reaktionsgemisch aus Schritt b), gefolgt von Kondensation, Destillation und Wiederverwendung des nicht abreagierten gasförmigen Diens, Abtrennung der wässrigen Phase umfassend das hydrophile Lösungsmittel vom Reaktionsgemisch, gefolgt von und Wiederverwendung des hydrophilen Lösungsmittels in Schritt a), und destillatives Reinigen des Polymerisationsproduktes sowie eine dazu eingerichtete Anlage sowie die Verwendung dieser Anlage zur Polymerisation eines Diens, wobei es sich bei dem Dien um bevorzugt 1,3-Butadien oder Isopren handelt.

Diene stellen eine Klasse industriell hoch relevanter organischer Verbindungen dar. Wichtige Vertreter wie 1,3-Butadien, Isopren, Cyclopentadien und dergleichen sind interessante und wichtige Ausgangsstoffe für chemische Synthesen gleichermaßen im Labor- und Großmaßstab. Aus Dienen hergestellte Endprodukte umfassen Synthesekautschuk, Acrylnitril-Butadien-Styrol und Polyamide.

Diene sind in großen Mengen aus dem Cracken von Erdöl erhältlich, wo sie aus der Gasphase der Steamcrackerprodukte gewonnen werden können. Die dabei erhaltenen Dien-Monomerbausteine müssen für viele Anwendungen polymerisiert werden.

Aus der Literatur sind verschiedene dazu geeignete Verfahren bekannt, beispielsweise diejenigen, die die Polymerisation von 1,3-Butadien beschreiben. So offenbart die DE 2215748 ein Verfahren zu Herstellung von niedermolekularen Polymeren aus konjugierten Dienen. Das zu Grunde liegende Reaktionssystem umfasst Trihydrocarbylorthophoshatester oder alternativ gesättigte monocyclische, alicyclische Alkohole oder Ketone.

Die im Stand der Technik beschriebenen Verfahren sind mit Hinblick auf die Produktausbeute relativ zur Menge des eingesetzten Diens verbesserungswürdig. Insbesondere bei denjenigen Verfahren, die sich sauerstoffhaltiger Reagenzien bedienen, besteht darüber hinaus Bedarf, die Gefahr von Explosionen durch eine geeignete Reaktionsführung und Aufreinigung des Dien-Monomers zu verringern.

Eine der Erfindung zu Grunde liegende Aufgabe bestand vor diesem Hintergrund darin, ein Verfahren zur Polymerisation von Dienen mit möglichst hoher Ausbeute an polymerisiertem Dien im Verhältnis zum eingesetzten Dien-Monomer bereitzustellen.

Eine weitere der Erfindung zu Grund liegende Aufgabe bestand darin, ein Verfahren zur Polymerisation von Dienen bereitzustellen, das höheren Sicherheitsanforderungen genügt, besonders mit Hinblick auf Explosionsgefahr.

Eine weitere der Erfindung zu Grunde liegende Aufgabe bestand darin, ein Verfahren zur Polymerisation von Dienen mit einem geringeren Nettoverbrauch an organischen Lösungsmitteln, bevorzugt bezogen auf die Menge des erhaltenen Dienpolymers, bereitzustellen.

Eine weitere der Erfindung zu Grunde liegende Aufgabe bestand darin, ein Verfahren zu Polymerisation von Dienen bereitzustellen, bei dem die Ausbeute an polymerisiertem Dien bei möglichst niedrig bleibender Viskosität erhöht ist.

Diese und weitere Aufgaben werden durch den Gegenstand der vorliegenden Anmeldung und insbesondere auch durch den Gegenstand der beigefügten unabhängigen Ansprüche gelöst, wobei sich Ausführungsformen aus den Unteransprüchen ergeben.

In einem ersten Aspekt wird das der Erfindung zu Grunde liegende Problem gelöst durch ein Verfahren zur Polymerisation eines Diens, umfassend die Schritte
a) Umsetzung des Diens mit Wasserstoffperoxid in einem hydrophilen organischen Lösungsmittel in Anwesenheit von Wasser unter Bildung eines Reaktionsgemisches bei Temperaturen von 50 - 150 °C und Druckwerten von 0 bis 50 bar.
b) Kontaktieren des Reaktionsgemisches mit Wasser, wobei die Temperatur des Wassers 20 bis 80 °C, bevorzugt 30 bis 70 °C, noch bevorzugter 50 bis 65 °C beträgt.
c) Abtrennen von nicht abreagiertem gasförmigen Dien von dem mit Wasser kontaktierten Reaktionsgemisch aus Schritt b), gefolgt von Kondensation, Destillation und Wiederverwendung des nicht abreagierten gasförmigen Diens,
d) Abtrennen der wässrigen Phase umfassend das hydrophile Lösungsmittel vom Reaktionsgemisch, gefolgt von Wiederverwendung des hydrophilen Lösungsmittels in Schritt a), und
e) Destillatives Reinigen des Polymerisationsproduktes.

In einer ersten Ausführungsform des ersten Aspekts wird das Problem gelöst durch ein Verfahren, wobei es sich bei dem hydrophilen Lösungsmittel um ein bei Raumtemperatur flüssiges Alkanol, bevorzugt Isopropanol oder Ethanol, handelt.

In einer zweiten Ausführungsform, die auch eine Ausführungsform der ersten Ausführungsform darstellt, wird das Problem gelöst durch ein Verfahren, wobei der Anteil in Schritt a) des hydrophilen Lösungsmittels 15 bis 30 Gew.-%, bevorzugt 20 bis 30 oder 22 bis 30 Gew.-%, der des Diens 60 bis 80 Gew.-%, der des Wassers weniger als 10 Gew.-%, bevorzugt 2 bis 8,1 Gew.-%, und der des Wasserstoffperoxids 1 bis 5 Gew.-% beträgt.

In einer dritten Ausführungsform, die auch eine Ausführungsform der ersten bis zweiten Ausführungsform darstellt, wird das Problem durch ein Verfahren gelöst, wobei Schritt a) bei einer Temperatur von 90 bis 130 °C, bevorzugt 110 bis 130 °C durchgeführt wird.

In einer vierten Ausführungsform, die auch eine Ausführungsform der ersten bis dritten Ausführungsform darstellt, wird das Problem durch ein Verfahren gelöst, wobei Schritt a) bei Druckwerten von 12 bis 30 bar durchgeführt wird.

In einer fünften Ausführungsform, die auch eine Ausführungsform der ersten bis vierten Ausführungsform darstellt, wird das Problem durch ein Verfahren gelöst, wobei das Reaktionsgemisch aus Schritt a) zu Beginn von Schritt b) eine um nicht mehr als 20, bevorzugte 15, noch bevorzugter 10 °C niedrigere Temperatur als in Schritt a) aufweist. In einer weiteren bevorzugten Ausführungsform wird das Reaktionsgemisch aus Schritt a) vor Beginn von Schritt b) abgekühlt, bevorzugt um wenigstens 10, 15, 20, 25, 30 oder 40 °C.

In einer sechsten Ausführungsform, die auch eine Ausführungsform der ersten bis fünften Ausführungsform darstellt, wird das Problem durch ein Verfahren gelöst, wobei die Temperatur des Reaktionsgemisches bei Schritt a) 110 bis 130 °C und die Temperatur des Reaktionsgemisches zu Beginn von Schritt b) nicht weniger als 100 °C beträgt.

In einer siebten Ausführungsform, die auch eine Ausführungsform der ersten bis sechsten Ausführungsform darstellt, wird das Problem durch ein Verfahren gelöst, wobei es sich bei dem Dien um 1,3-Butadien oder Isopren handelt.

In einer achten Ausführungsform, die auch eine Ausführungsform der ersten bis siebten Ausführungsform darstellt, wird das Problem durch ein Verfahren gelöst, wobei das Wasser in Schritt b) eine Temperatur von wenigstens 40 °C, bevorzugt 40 bis 80 °C, noch bevorzugter 50 bis 65 °C aufweist.

In einer neunten Ausführungsform, die auch eine Ausführungsform der ersten bis achten Ausführungsform darstellt, wird das Problem durch ein Verfahren gelöst, wobei in Schritt c) das kondensierte Dien mit einem Desoxidationsmittel kontaktiert wird.

In einer zehnten Ausführungsform, die auch eine Ausführungsform der neunten Ausführungsform darstellt, wird das Problem durch ein Verfahren gelöst, wobei das Desoxidationsmittel bevorzugt aus der Gruppe ausgewählt ist, die Dithionit, Pyrogallol, Ascorbinsäure und eine Mischung umfassend Bisulfit und Sulfit umfasst.

In einer elften Ausführungsform, die auch eine Ausführungsform der ersten bis zehnten Ausführungsform darstellt, wird das Problem durch ein Verfahren gelöst, wobei als Desoxidationsmittel eine Mischung umfassend Bisulfit und Sulfit in einer Endkonzentration von 0,1 bis 1,5 Gew.-%, bevorzugt 0,2 bis 1 Gew.-% zum kondensierten Dien gegeben wird.

In einer zwölften Ausführungsform, die auch eine Ausführungsform der ersten bis elften Ausführungsform darstellt, wird das Problem durch ein Verfahren gelöst, wobei Schritt d) unter Verwendung eines Dekanters durchgeführt wird.

In einer dreizehnten Ausführungsform, die auch eine Ausführungsform der ersten bis zwölften Ausführungsform darstellt, wird das Problem durch ein Verfahren gelöst, wobei die Reaktionsmischung aus Schritt a) ohne vorherige Kühlung in Schritt b) mit Wasser kontaktiert wird.

In einer vierzehnten Ausführungsform, die auch eine Ausführungsform der ersten bis dreizehnten Ausführungsform darstellt, wird das Problem durch ein Verfahren gelöst, wobei wenigstens ein Teil des nicht abreagierten gasförmigen Diens vor dem Kontaktieren mit Wasser in Schritt b) vom Reaktionsgemisch abgetrennt wird, gefolgt von Kondensation, Destillation und Wiederverwendung des nicht abreagierten gasförmigen Diens.

In einem zweiten Aspekt wird das der Aufgabe zu Grunde liegende Problem gelöst durch eine Anlage zur Polymerisation eines bei Raumtemperatur gasförmigen Diens umfassend einen Reaktionsbehälter (1) zur Polymerisation des Diens,
eingerichtet für die Umsetzung eines Diens mit Wasserstoffperoxid in einem hydrophilen organischen Lösungsmittel unter Bildung einer Reaktionsmischung,
umfassend eine Flash-Anlage (2),
eingerichtet dafür, dass die Reaktionsmischung aus dem Reaktionsbehälter (1) in sie abführbar ist,
eingerichtet dafür, dass nicht abreagiertes, gasförmiges Dien aus der Flash-Anlage von der Reaktionsmischung abtrennbar und überführbar ist in eine Vorrichtung zur Kondensation (5), anschließend in eine Vorrichtung zur Destillation (6) und schließlich zurück in den Reaktionsbehälter (1),
eingerichtet dafür, dass darin Wasser vorgelegt und mit der Reaktionsmischung aus dem Reaktionsbehälter (1) kontaktiert werden kann unter Bildung einer wässrigen, das hydrophile organische Lösungsmittel umfassenden Phase,
weiter umfassend eine der Flash-Anlage nachgeschaltete Anlage zur Phasentrennung (3),
eingerichtet dafür, dass die von dem nicht abreagierten, gasförmigen Dien abgetrennte Reaktionsmischung aus der Flash-Anlage (2) in sie überführbar ist,
eingerichtet dafür, dass die wässrige, das hydrophile organische Lösungsmittel umfassende Phase von der Reaktionsmischung abtrennbar und überführbar ist zunächst in eine Vorrichtung zur Destillation (7) und schließlich zurück in den Reaktionsbehälter (1),
weiter umfassend eine der Anlage zur Phasentrennung (3) nachgeschaltete Vorrichtung zur Destillation (4),
eingerichtet dafür, dass die von der wässrigen, das hydrophile organische Lösungsmittel umfassenden Phase abgetrennte Reaktionsmischung aus der Anlage zur Phasentrennung (3) in sie überführbar ist,
eingerichtet dafür, dass das Produkt aus der von der wässrigen, das hydrophile organische Lösungsmittel umfassenden Phase abgetrennten Reaktionsmischung destillativ aufgereinigt werden kann.

In einer ersten Ausführungsform des zweiten Aspekts wird das Problem gelöst durch eine Anlage, wobei es sich bei dem Reaktionsbehälter (1) um einen Behälter aus passiviertem Edelstahl handelt.

In einer zweiten Ausführungsform, die auch eine Ausführungsform der ersten Ausführungsform darstellt, wird das Problem gelöst durch eine Anlage, wobei die Eigenschaft, dass die Reaktionsmischung oder die das hydrophile organische Lösungsmittel umfassende Phase oder das nicht abreagierte, gasförmige Dien zwischen dem Reaktionsbehälter (1), der Flash-Anlage (2), der Vorrichtung zur Kondensation (5), der Vorrichtung zur Destillation (6), der Anlage zur Phasentrennung (3), der Vorrichtung zur Destillation (7) überführbar sind, durch geeignete verbindende Rohrleitungen gegeben ist.

In einer dritten Ausführungsform, die auch eine Ausführungsform der ersten bis zweiten Ausführungsform darstellt, wird das Problem gelöst durch eine Anlage, wobei die Vorrichtung zur Kondensation (5) ein Desoxidationsmittel umfasst, das bevorzugt aus der Gruppe ausgewählt ist, die Dithionit, Pyrogallol, Ascorbinsäure und eine Mischung umfassend Bisulfit und Sulfit umfasst.

In einer vierten Ausführungsform, die auch eine Ausführungsform der ersten bis dritten Ausführungsform darstellt, wird das Problem gelöst durch eine Anlage, wobei es sich bei der Anlage zur Phasentrennung (3) um einen Dekanter handelt.

In einer fünften Ausführungsform, die auch eine Ausführungsform der ersten bis vierten Ausführungsform darstellt, wird das Problem gelöst durch eine Anlage, wobei der Reaktionsbehälter (1) eingerichtet ist dafür, dass nichtabreagiertes, gasförmiges Dien aus dem Reaktionsbehälter überführbar ist in eine Vorrichtung zur Kondensation (5), anschließend in eine Vorrichtung zur Destillation (6) und schließlich zurück in den Reaktionsbehälter (1).

Das der Erfindung zu Grunde liegende Problem wird in einem dritten Aspekt gelöst durch Verwendung der Anlage nach einem der Ansprüche 16 bis 21 zur Polymerisation eines Diens, bevorzugt 1,3-Butadien oder Isopren.

Die vorliegende Erfindung beruht auf der überraschenden Erkenntnis der Erfinder, dass die Ausbeute eine Dienpolymerisation und die Reinheit des Dienpolymerproduktes unter Verwendung des erfindungsgemäßen Verfahrens gegenüber herkömmlichen Verfahren zur Dienpolymerisation erhöht sind.

Die vorliegende Erfindung beruht weiterhin auf der überraschenden Erkenntnis der Erfinder, dass die Menge des benötigen Lösungsmittels unter Verwendung des erfindungsgemäßen Verfahrens gegenüber herkömmlichen Verfahren zur Dienpolymerisation verringert ist.

Die vorliegende Erfindung beruht weiterhin auf der überraschenden Erkenntnis der Erfinder, dass ein zur radikalischen Polymerisation geeignetes Verfahren erhöhten Sicherheitsanforderungen genügt, wenn auftretende reaktive Sauerstoffspezies nach Abtrennung von der Polymerisationsreaktion rasch durch Kontakieren mit wenigstens einem Desoxidationsmittel eliminiert werden.

Die vorliegende Erfindung beruht weiterhin auf der überraschenden Erkenntnis der Erfinder, dass eine Begrenzung des Wasseranteils in der Reaktionsmischung, in der die Polymerisation abläuft, bei gleichzeitig hohem Anteil eines hydrophilen organischen Lösungsmittel die Ausbeute an Dienpolymerisationsprodukt erhöht.

Mittels des erfindungsgemäßen Verfahrens können Diene in vorteilhafter Weise polymerisiert werden. In einer bevorzugten Ausführungsform wird unter dem Begriff "Dien", wie hierin verwendet, ein organisches, aliphatisches, verzweigtes oder unverzweigtes Molekül mit zwei Doppelbindungen verstanden, besonders bevorzugt ein Molekül der Summenformel CₙH₂ₙ-_{2.} Entscheidend ist das Vorhandensein zweier Doppelbindungen, bevorzugterweise konjugierter Doppelbindungen, die die Polymerisation nach Zugabe von Wasserstoffperoxid als Initiator erlauben. Besonders bevorzugte Diene umfassen 1,3-Butadien und Isopren. Auch die Polymerisation von Mischungen verschiedener Diene ist erfindungsgemäß möglich.

Im erfindungsgemäßen Verfahren läuft die Polymerisation in Schritt a) ab. Die Polymerisation des Diens nach Wasserstoffperoxidzugabe verläuft dabei nach einem radikalischen Mechanismus ab, bei dem ein Hydroxyl-Radikal eine C=C-Doppelbindung des Diens unter Bildung eines Kohlenstoffradikals und einer Hydroxylgruppe am Kohlenstoffatom angreift. Das Kohlenstoffradikal kann die Polymerisationsreaktion durch Angriff einer weiteren C=C-Doppelbindung fortsetzen. Die Reaktion kommt u.a. durch Reaktion zweier Radikale zum Erliegen. Als Reaktionsprodukt kommt dementsprechend ein Dienpolymer mit mindestens zwei Hydroxygruppen in Frage. Es können auch spezielle Radikalfänger eingesetzt werden, deren Verwendung zur Bildung von Dienpolymeren mit anderen endständigen Gruppen führt. Das Molekulargewicht kann u.a. über Konzentration und Verhältnis von Monomeren, Initiatoren und ggf. Radikalfängern gesteuert werden.

Die durch Wasserstoffperoxid initiierte Polymerisation von Dien läuft erfindungsgemäß in Anwesenheit eines hydrophilen organischen Lösungsmittel und in Anwesenheit von Wasser ab. In einer bevorzugten Ausführungsform wird unter dem Begriff "hydrophiles organisches Lösungsmittel" ein organisches Lösungsmittel verstanden, das bei 25 °C mit Wasser mischbar ist, ohne dass es zur Ausbildung einer von der wässrigen Phase getrennten organischen Phase kommt. In einer bevorzugten Ausführungsform handelt es sich bei dem hydrophilen organischen Lösungsmittel um bei Raumtemperatur flüssiges unverzweigtes oder verzweigtes Alkanol, noch bevorzugter um ein unverzweigtes oder verzweigtes 1-Alkanol, am bevorzugtesten um Isopropanol oder Ethanol. Der Anteil des hydrophilen organischen Lösungsmittels, bevorzugt von Ethanol, beträgt 15 bis 30 Gew.-%, bevorzugt 17,5 bis 30 Gew.-%, noch bevorzugter 20 bis 30 oder 22 bis 30 Gew.-%. Entscheidend für das Erzielen einer optimalen Ausbeute ist der Anteil an Wasser in Schritt a), der nicht zu hoch sein darf und in der Reihenfolge zunehmender Bevorzugung weniger als 10, 9, 8, 7, 6, 5 oder 4 Prozent und beträgt besonders bevorzugt 2 bis 8,1 Gew.-% beträgt.

Die ab Zugabe des Starters bemessene Reaktionszeit in Schritt a) beträgt wenigstens 0,5, bevorzugter 1, 1,5, 2 oder 3 Stunden.

Optional kann ein Teil des nicht abreagierten Dien-Monomers, das bei Druckwerten von bis zu 50 bar vorliegt, unmittelbar nach Ende der Reaktion durch Druckablass entfernt werden.

In Schritt b) des erfindungsgemäßen Verfahrens wird die Reaktionsmischung aus Schritt a) mit Wasser kontaktiert. In einer bevorzugten Ausführungsform wird dazu auf 20 bis 80, bevorzugt 50 bis 65 °C temperiertes Wasser in einem geeigneten Behälter, bevorzugt in einer Flash-Anlage, vorgelegt und die Reaktionsmischung aus Schritt a) wird hineingeleitet.

Bei dem erfindungsgemäß eingesetzten Wasser handelt es sich in einer besonders bevorzugten Ausführungsform um vollentsalztes Wasser.

In Schritt c) des erfindungsgemäßen Verfahrens wird weiteres nicht abreagiertes gasförmiges Dien von dem mit Wasser kontaktierten Reaktionsgemisch aus Schritt b) abgetrennt, vorzugsweise in der Weise, dass relativ zum Atmosphärendruck Unterdruck angelegt wird. In einer besonders bevorzugten Ausführungsform wird dieser Schritt in einer Flash-Anlage ausgeführt. In einer bevorzugten Ausführungsform wird unter dem Begriff "Flash-Anlage", wie hierin verwendet, ein als Entspannungsverdampfungsbehälter geeigneter Behälter verstanden, beispielsweise ein Rührbehälter aus passiviertem Edelstahl, der temperierbar und vakuumtauglich ausgestattet ist. Die Schritte a) und b) können in einer bevorzugten Ausführungsform im gleichen Behälter durchgeführt werden, sofern dieser als Flash-Anlage ausgestattet ist. Die Abtrennung eines Gases mittels einer Flash-Anlage ist in Fluidverfahrenstechnik, herausgegeben von R. Goedecke, S.693 2006 Wiley-VCH Verlag GmbH & Co KGaA, Weinheim, beschrieben.

Das abtrennte nicht abreagierte Dien, entweder aus Schritt a) oder aus Schritt c), wird durch Kondensation und Destillation zurückgewonnen und erneut für die Polymerisationsreaktion in Schritt a) verwendet.

Vorteilhafterweise wird das Verfahren derart ausgeführt, dass das in Schritt c) kondensierte Dien mit einem Desoxidationsmittel kontaktiert wird. In einer bevorzugten Ausführungsform wird unter dem Begriff "Desoxidationsmittel", wie hierein verwendet, eine Verbindung verstanden, die die Konzentration von reaktiven Sauerstoffverbindungen erniedrigt. Beispiele geeigneter Radikalfänger umfassen Bisulfit, Sulfit und Dithionit oder Mischungen davon. Der Desoxidationsmittel wird, sofern es sich um eine Mischung umfassend Bisulfit und Sulfit handelt, bevorzugt in einer Endkonzentration von 0,1 bis 1,5, bevorzugt 0, 2 bis 1 Gew.-% zum kondensierten Dien gegeben. In einer bevorzugten Ausführungsform beträgt die Konzentration des Desoxidationsmittels beim Kontaktieren mit dem kondensierten Diens 0,1 bis 5, bevorzugter 0,5 bis 5 Molküle Desoxidationsmittel pro Molekül aktiver Sauerstoffverbindung in der Lösung umfassend das kondensierte Dien, wobei der Begriff "aktive Sauerstoffverbindung" in einer bevorzugten Ausführungsform Wasserstoffperoxid, organische Peroxide und Sauerstoff umfasst. In einer weiteren bevorzugten Ausführungsform beträgt die Konzentration beim Kontaktieren mit dem Dien wenigstens 0,5, 1, 2, 2,5 oder 5 Moleküle Desoxidationsmittel pro bei der radikalischen Polymerisation eingesetztem Molekül Wasserstoffperoxid.

In Schritt d) des erfindungsgemäßen Verfahrens wird die wässrige Phase mit dem hydrophilen organischen Lösungsmittel vom Reaktionsgemisch abgetrennt, das danach überwiegend das Polymerisationsprodukt umfasst. Die Abtrennung erfolgt ein einer bevorzugten Ausführungsform mittels eines Dekanters, der auch Teil der erfindungsgemäßen Anlage sein kann. Aus der wässrigen Phase kann das hydrophile organische Lösungsmittel destillativ zurückgewinnen und erneut für die Polmyerisationsreaktion in Schritt a) eingesetzt werden. Destillationsverfahren sind in Fluidverfahrenstechnik, herausgegeben von R. Goedecke, S.689ff (Kapitel 8 Rektifikation) 2006 Wiley-VCH verlag GmbH & co KGaA, Weinheim, beschrieben.

In einer weiteren bevorzugten Ausführungsform kann die Reaktionsmischung vor Schritt d) als Teil des erfindungsgemäßen Verfahrens oder der erfindungsgemäßen Anlage über einen Pufferbehälter geleitet werden.

In Schritt e) des erfindungsgemäßen Verfahrens wird das Polymerisationsprodukt von organischen Nebenprodukten, beispielsweise Dien-Dimeren destillativ gereinigt, bevorzugt über einen Dünnschichtverdampfer. Geeignete Verfahren sind in Fluidverfahrenstechnik, herausgegeben von R. Goedecke, S.637ff 2006 Wiley-VCH Verlag GmbH & co KGaA, Weinheim, beschrieben.

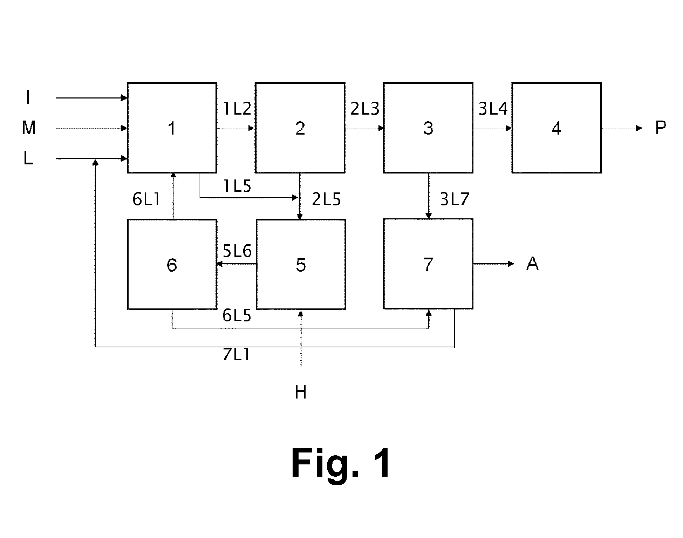

Das erfindungsgemäße Verfahren eignete sich zur Ausführung in jeglichem Maßstab, gleichermaßen im Labor- oder im Industriemaßstab. Für letzteren Fall eignet sich insbesondere die in Fig. 1 dargestellte erfindungsgemäße Anlage. Sie umfasst zunächst einen Reaktionsbehälter (1) zur Polymerisation des Diens, eingerichtet für die Umsetzung eines Diens mit Wasserstoffperoxid in einem hydrophilen organischen Lösungsmittel unter Bildung einer Reaktionsmischung. Bei dem Reaktionsbehälter handelt es sich bevorzugt um einen Reaktionsbehälter aus passiviertem Edelstahl.

Weiterhin umfasst die erfindungsgemäße Anlage eine Flash-Behälter (2), eingerichtet dafür, dass die Reaktionsmischung aus dem Reaktionsbehälter (1) in sie abführbar ist, eingerichtet dafür, dass nicht abreagiertes, gasförmiges Dien aus der Flash-Behälter von der Reaktionsmischung abtrennbar und überführbar ist in eine Vorrichtung zur Kondensation (5), anschließend in eine Vorrichtung zur Destillation (6) und schließlich zurück in den Reaktionsbehälter (1), eingerichtet dafür, dass darin Wasser vorgelegt und mit der Reaktionsmischung aus dem Reaktionsbehälter (1) kontaktiert werden kann unter Bildung einer wässrigen, das hydrophile organische Lösungsmittel umfassenden Phase. Der Reaktionsbehälter (1) ist über eine Leitung (1 L2) mit der nachfolgenden Flash-Anlage (2) verbunden.

Weiterhin umfasst die erfindungsgemäße Anlage eine der Flash-Anlage (2) nachgeschaltete Anlage zur Phasentrennung (3), eingerichtet dafür, dass die von dem nicht abreagierten, gasförmigen Dien abgetrennte Reaktionsmischung aus der Flash-Anlage (2) in sie überführbar ist, eingerichtet dafür, dass die wässrige, das hydrophile organische Lösungsmittel umfassende Phase von der Reaktionsmischung abtrennbar und überführbar ist zunächst in eine Vorrichtung zur Destillation (7) und schließlich zurück in den Reaktionsbehälter (1). Die Anlage zur Phasentrennung (3) ist über eine Leitung (2L3) mit der Flash-Anlage verbunden.

Weiterhin umfasst die erfindungsgemäße Anlage eine der Anlage zur Phasentrennung (3) nachgeschaltete Vorrichtung zur Destillation (4), eingerichtet dafür, dass die von der wässrigen, das hydrophile organische Lösungsmittel umfassenden Phase abgetrennte Reaktionsmischung aus der Anlage zur Phasentrennung (3) in sie überführbar ist, und eingerichtet dafür, dass das Produkt aus der von der wässrigen, das hydrophile organische Lösungsmittel umfassenden Phase abgetrennten Reaktionsmischung destillativ aufgereinigt werden kann. Die Anlage zur Phasentrennung ist über eine Leitung (3L4) mit der Vorrichtung zur Destillation verbunden.

In einer bevorzugten Ausführungsform besteht die Möglichkeit, gasförmiges Dien aus dem Reaktionsbehälter direkt in die Vorrichtung zur Kondensation (5) oder über eine die Flash-Anlage (2) mit der Vorrichtung zur Kondensation (2) verbindende Leitung (2L5) einzulassen, beispielsweise über eine dafür eingerichtete Leitung (1 L5).

In einer bevorzugten Ausführungsform enthält die Vorrichtung zur Kondensation wenigstens ein Desoxidationsmittel.

Die vorliegende Erfindung wird weiterhin durch die folgenden Figuren und nicht beschränkenden Beispiele veranschaulicht, denen weitere Merkmale, Ausführungsformen, Aspekte und Vorteile der vorliegenden Erfindung entnommen werden können.

Fig. 1 zeigt eine erfindungsgemäße Anlage zur Ausführung des erfindungsgemäßen Verfahrens umfassend einen Reaktionsbehälter (1) zur Polymerisation des Diens, eine Flash-Anlage (2), eine Anlage zur Phasentrennung (3) mit nachgeschalteter Vorrichtung zur Destillation (4), eine Vorrichtung zur Kondensation (5), eine Vorrichtung zur Destillation (6) und eine weitere Vorrichtung zur Destillation (7). Die Abkürzungen stehen für Dien-Monomer (M), Polydien-Produkt (P), Initiator Wasserstoffperoxid (I), Lösungsmittel (L), Abwasser (A) und Desoxiadtionsmittel (H). Leitungen zur Überführung von Stoffen zwischen den Behältnissen sind im Format "XLY" benannt, wobei X die Nummer des Behältnisses bezeichnet, aus dem der Stoff austritt, und Y die Nummer des Behältnisses, in den der aus dem Behältnis X austretende Stoff eintritt.

### Beispiel 1:

In einem passivierten 5 L-Edelstahlautoklav der Fa. Büchi (Typ 4; Edelstahl: 1.4571; Druckbeständigkeit: -1 bis 40 bar) wurden zunächst 491 mL mit Toluol vergälltem Ethanol (92%ig) vorgelegt. Im Anschluss wurden 1214 g 1,3-Butadien zudosiert.. Nach Erreichen von mindestens 90 °C wurde bei mindestens 14 bar 74 ml Wasserstoffperoxid (50%ig) über eine Schleuse zudosiert. Die Schleuse wurde im Anschluss mit vollentsalztem Wasser gespült. Danach wurde der Reaktorinhalt weiter auf 120 °C aufgeheizt. Ab dem Zeitpunkt der Zudosierung des Wasserstoffperoxids wurde die Reaktion für 2 h auf 120 °C gebracht und dann bei dieser Temperatur gehalten. Die Druckwerte während der Reaktion hatten einen Verlauf von 14-28 bar.

Nach Ablauf der Reaktionszeit wurde der Reaktorinhalt auf kleiner gleich 78 °C abgekühlt. Nach Erreichen der 78 °C wurde der Reaktorinhalt in den dafür vorgesehenen Behälter (Flash-Anlage) entspannt und dabei das überschüssige Butadien abgetrennt. In diesem Behälter waren 650 g Wasser bei 40 bis 80 °C vorgelegt worden. Der Inhalt des Flash-Behälters wurde für eine Stunde bei 60°C unter einem gegenüber Atmosphärendruck um 0,2 bis 0,4 erniedrigtem Druck gerührt, um den Rest des Butadien-Monomers zu entfernen. Nach einer Absetzzeit von 8 min bis einer Stunde erhielt man zwei Phasen. Die obere organische Phase enthielt das gewünschte Polymer, die untere wässrige Phase das nicht umgesetzte Wasserstoffperoxid.

Die organische Phase wurde in einem handelsüblichen Scheidetrichter von der wässrigen Phase getrennt. Die flüchtigen organischen Bestandteile wurden aus der organischen Phase am Vakuum entfernt, blieben 595 g des gewünschte Produkts zurück, was bezogen auf die Menge des eingesetzten Butadiens einer Ausbeute von 49% entspricht.

### Beispiel 2:

In einem passivierten 5 L-Edelstahlautoklav der Fa. Büchi (Typ 4; Edelstahl: 1.4571; Druckbeständigkeit: -1 bis 40 bar) wurde zunächst 491 ml mit Toluol vergälltem Ethanol (92%ig) vorgelegt. Im Anschluss wurden 1214 g Butadien zudosiert. Während der Zudosierung des Butadiens wurde bereits begonnen, den Reaktorinhalt auf 90 °C bis 100 °C aufzuheizen. Nach Erreichen von mind. 90 °C wurde (bei mindestens 14 bar)) 74 ml Wasserstoffperoxid (35%ig) über eine Schleuse zudosiert. Die Schleuse wurde im Anschluss mit vollentsalztem Wasser gespült. Danach wurde der Reaktorinhalt weiter auf 120 °C aufgeheizt und für die Reaktionszeit bei dieser Temperatur und Druckwerten von 14 bis 29 bar gehalten. Ab dem Zeitpunkt der Zudosierung des Wasserstoffperoxids wurde die Reaktionszeit von 2 Stunden bemessen. Nach Ende der Reaktionszeit wurde der Reaktorinhalt direkt aus dem Polymerisationskessel auf 3 bar bis 1 bar entspannt (Druckflash), dieser dauerte ca. 15 min. Der Reaktorinhalt wurde nach dem Entfernen des Hauptteils des 1,3-Butadiens mit Hilfe des Restdruck (3 bis 1 bar) im Reaktor oder unter Aufbringen von Stickstoffdruck in den Flash/Waschbehälter überführt und das überschüssige Butadien abgetrennt.

In diesem Flash/Wasch-Behälter waren 650 g Wasser bei 60 °C vorgelegt worden. Der Inhalt des Flash/Wasch - Behälters wurde für eine Stunde bei 60 °C unter einem Vakuum von 0,6 bis 0,8 bar gerührt, um den Rest des Butadienmonomers zu entfernen. Nach einer Absetzzeit von 8 Minuten bis einer Stunde erhielt man zwei Phasen. Die obere organische Phase enthielt das gewünschte Polymer, die untere wässrige Phase das nicht umgesetzte Wasserstoffperoxid.

Die organische Phase wurde in einem handelsüblichen Scheidetrichter von der wässrigen Phase getrennt. Die flüchtigen organischen Bestandteile wurden aus der organischen Phase am Vakuum entfernt, blieb 575 g des gewünschte Produkts zurück, was bezogen auf die Menge des eingesetzten Butadiens einer Ausbeute von 47 % entspricht.

### Beispiel 3

In einem passivierten 5 L-Edelstahlautoklav der Fa. Büchi (Typ 4; Edelstahl: 1.4571; Druckbeständigkeit: -1 bis 40 bar) wurde zunächst 560 ml Ethanol (92%ig) vorgelegt. Im Anschluss wurden 1214 g Butadien zudosiert. Nach Erreichen von mind. 90 °C wurde (bei mindestens 14 bar) 74,0 ml Wasserstoffperoxid (50%ig) über eine Schleuse zudosiert. Die Schleuse wurde im Anschluss mit vollentsalztem Wasser gespült. Danach wurde der Reaktorinhalt weiter auf 120 °C aufgeheizt und für die Reaktionszeit bei dieser Temperatur und Druckwerten von 14 bis 29 bar gehalten. Ab dem Zeitpunkt der Zudosierung des Wasserstoffperoxids wurde die Reaktionszeit von 2 Stunden bemessen. Nach Ende der Reaktionszeit wurde der Reaktorinhalt direkt aus dem Polymerisationskessel auf 3 bar entspannt (Druckflash), dieser Flash-Vorgang dauerte ca. 15 min. Der Reaktorinhalt wurde nach dem Entfernen des Hauptteils des 1,3-Butadiens mit Hilfe des Restdruck (3 bar) im Reaktor und/oder alternativ unter Aufbringen von Stickstoffdruck in den Flash/Waschbehälter überführt und das überschüssige Butadien abgetrennt.

In diesem Flash/Wasch-Behälter waren 650 g Wasser bei 60 °C vorgelegt worden. Der Inhalt des Flash/Wasch - Behälters wurde für eine Stunde bei 60°C unter einem Vakuum von 0,6 bis 0,8 bar abs gerührt, um den Rest des Butadienmonomers zu entfernen. Nach einer Absetzzeit ab 8 Minuten erhielt man zwei Phasen. Die obere organische Phase enthielt das gewünschte Polymer, die untere wässrige Phase das nicht umgesetzte Wasserstoffperoxid.

Die organische Phase wurde in einem handelsüblichen Scheidetrichter von der wässrigen Phase getrennt. Die flüchtigen organischen Bestandteile wurden aus der organischen Phase am Vakuum entfernt, blieb 633,8 g, was bezogen auf die Menge des eingesetzten Butadiens einer Ausbeute von 47 % entspricht.

## Patentansprüche

1. Verfahren zur Polymerisation eines Diens, bevorzugt 1,3-Butadien oder Isopren, umfassend die Schritte
a) Umsetzung des Diens mit Wasserstoffperoxid in einem hydrophilen organischen Lösungsmittel in Anwesenheit von Wasser unter Bildung eines Reaktionsgemisches bei Temperaturen von 50 bis 150 °C und Druckwerten von 0 bis 50 bar.
b) Kontaktieren des Reaktionsgemisches mit Wasser, wobei die Temperatur des Wassers 20 bis 80 °C, bevorzugt 50 bis 65 °C beträgt.
c) Abtrennen von nicht abreagiertem gasförmigen Dien von dem mit Wasser kontaktierten Reaktionsgemisch aus Schritt b), gefolgt von Kondensation, Destillation und Wiederverwendung des nicht abreagierten gasförmigen Diens,
d) Abtrennen der wässrigen Phase umfassend das hydrophile Lösungsmittel vom Reaktionsgemisch, gefolgt von Wiederverwendung des hydrophilen Lösungsmittels in Schritt a), und
e) Destillatives Reinigen des Polymerisationsproduktes.

2. Verfahren nach Anspruch 1, wobei es sich bei dem hydrophilen Lösungsmittel um ein bei Raumtemperatur flüssiges Alkanol, bevorzugt Isopropanol oder Ethanol, handelt.

3. Verfahren nach einem der Ansprüche 1 bis 2, wobei der Anteil in Schritt a) des hydrophilen Lösungsmittels 15 bis 30 Gew.-%, bevorzugt 22 bis 30 Gew.-%, der des Diens 60 bis 80 Gew.-%, der des Wassers weniger als 10 Gew.-%, bevorzugt 2 bis 8,1 Gew.-%, und der des Wasserstoffperoxids 1 bis 5 Gew.-% beträgt.

4. Verfahren nach einem der Ansprüche 1 bis 3, wobei Schritt a) bei einer Temperatur von 90 bis 130 °C, bevorzugt 110 bis 130 °C durchgeführt wird.

5. Verfahren nach einem der Ansprüche 1 bis 4, wobei Schritt a) bei Druckwerten von 12 bis 30 bar durchgeführt wird.

6. Verfahren nach einem der Ansprüche 1 bis 5, wobei das Reaktionsgemisch aus Schritt a) zu Beginn von Schritt b) eine um nicht mehr als 20, bevorzugte 15, noch bevorzugter 10 °C niedrigere Temperatur als in Schritt a) aufweist.

7. Verfahren nach Anspruch 6, wobei die Temperatur des Reaktionsgemisches bei Schritt a) 110 bis 130 °C und die Temperatur des Reaktionsgemisches zu Beginn von Schritt b) nicht weniger als 100 °C beträgt.

8. Verfahren nach einem der Ansprüche 1 bis 7 wobei das Wasser in Schritt b) eine Temperatur von wenigstens 40 °C, bevorzugt 40 bis 80 °C, noch bevorzugter 50 bis 65 °C aufweist.

9. Verfahren nach einem der Ansprüche 1 bis 9, wobei in Schritt c) das kondensierte Dien mit einem Desoxidationsmittel kontaktiert wird, wobei das Desoxidationsmittel bevorzugt aus der Gruppe ausgewählt ist, die Dithionit, Pyrogallol, Ascorbinsäure und eine Mischung umfassend Bisulfit und Sulfit umfasst.

10. Verfahren nach einem der Ansprüche 8 bis 9, wobei als Desoxidationsmittel eine Mischung umfassend Bisulfit und Sulfit in einer Endkonzentration von 0,1 bis 1,5 Gew.-%, bevorzugt 0,2 bis 1 Gew.-% zum kondensierten Dien gegeben wird.

11. Verfahren nach einem der Ansprüche 1 bis 10, wobei die Reaktionsmischung aus Schritt a) ohne vorherige Kühlung in Schritt b) mit Wasser kontaktiert wird.

12. Verfahren nach einem der Schritte 1 bis 11, wobei wenigstens ein Teil des nicht abreagierten gasförmigen Diens vor dem Kontaktieren mit Wasser in Schritt b) vom Reaktionsgemisch abgetrennt wird, gefolgt von Kondensation, Destillation und Wiederverwendung des nicht abreagierten gasförmigen Diens.

13. Anlage zur Polymerisation eines bei Raumtemperatur gasförmigen Diens umfassend einen Reaktionsbehälter (1) zur Polymerisation des Diens,
eingerichtet für die Umsetzung eines Diens mit Wasserstoffperoxid in einem hydrophilen organischen Lösungsmittel unter Bildung einer Reaktionsmischung,
umfassend eine Flash-Anlage (2),
eingerichtet dafür, dass die Reaktionsmischung aus dem Reaktionsbehälter (1) in sie abführbar ist,
eingerichtet dafür, dass nicht abreagiertes, gasförmiges Dien aus der Flash-Anlage von der Reaktionsmischung abtrennbar und überführbar ist in eine Vorrichtung zur Kondensation (5), anschließend in eine Vorrichtung zur Destillation (6) und schließlich zurück in den Reaktionsbehälter (1),
eingerichtet dafür, dass darin Wasser vorgelegt und mit der Reaktionsmischung aus dem Reaktionsbehälter (1) kontaktiert werden kann unter Bildung einer wässrigen, das hydrophile organische Lösungsmittel umfassenden Phase,
weiter umfassend eine der Flash-Anlage nachgeschaltete Anlage zur Phasentrennung (3),
eingerichtet dafür, dass die von dem nicht abreagierten, gasförmigen Dien abgetrennte Reaktionsmischung aus der Flash-Anlage (2) in sie überführbar ist,
eingerichtet dafür, dass die wässrige, das hydrophile organische Lösungsmittel umfassende Phase von der Reaktionsmischung abtrennbar und überführbar ist zunächst in eine Vorrichtung zur Destillation (7) und schließlich zurück in den Reaktionsbehälter (1),
weiter umfassend eine der Anlage zur Phasentrennung (3) nachgeschaltete Vorrichtung zur Destillation (4),
eingerichtet dafür, dass die von der wässrigen, das hydrophile organische Lösungsmittel umfassenden Phase abgetrennte Reaktionsmischung aus der Anlage zur Phasentrennung (3) in sie überführbar ist,
eingerichtet dafür, dass das Produkt aus der von der wässrigen, das hydrophile organische Lösungsmittel umfassenden Phase abgetrennten Reaktionsmischung destillativ aufgereinigt werden kann.

14. Anlage nach Anspruch 13, wobei es sich bei dem Reaktionsbehälter (1) um einen Behälter aus passiviertem Edelstahl handelt.

15. Anlage nach einem der Ansprüche 13 bis 14, wobei die Eigenschaft, dass die Reaktionsmischung oder die das hydrophile organische Lösungsmittel umfassende Phase oder das abreagierte, gasförmige Dien zwischen dem Reaktionsbehälter (1), der Flash-Anlage (2), der Vorrichtung zur Kondensation (5), der Vorrichtung zur Destillation (6), der Anlage zur Phasentrennung (3), der Vorrichtung zur Destillation (7) überführbar sind, durch geeignete verbindende Rohrleitungen gegeben ist.

16. Anlage nach einem der Ansprüche 16 bis 18, wobei die Vorrichtung zur Kondensation (5) ein Desoxidationsmittel umfasst, bevorzugt ausgewählt aus der Gruppe umfassend Dithionit, Pyrogallol, Ascorbinsäure und eine Mischung umfassend Bisulfit und Sulfit.

17. Anlage nach einem der Ansprüche 13 bis 16, wobei der Reaktionsbehälter (1) eingerichtet ist dafür, dass nichtabreagiertes, gasförmiges Dien aus dem Reaktionsbehälter überführbar ist in eine Vorrichtung zur Kondensation (5), anschließend in eine Vorrichtung zur Destillation (6) und schließlich zurück in den Reaktionsbehälter (1).

18. Verwendung der Anlage nach einem der Ansprüche 13 bis 17 zur Polymerisation eines Diens, bevorzugt 1,3-Butadien oder Isopren.
